# EUROPÄISCHE PATENTSCHRIFT

(11) **EP 2 280 904 B1**
(45) Veröffentlichungstag und Bekanntmachung des Hinweises auf die Patenterteilung: **25.01.2012**
(21) Anmeldenummer: 08748758.3
(22) Anmeldetag: 21.04.2008
(51) Int. Cl.: B67D 7/04, B67D 7/80, B61D 5/00, B60P 3/22, B65D 88/74

(54) **VORRICHTUNG ZUR ENTLEERUNG EINES MIT FLIESSFÄHIGEN ERDÖLPRODUKTEN GEFÜLLTEN KESSELWAGENS**
DEVICE FOR EMPTYING A TANK CAR FILLED WITH FLOWING CRUDE OIL PRODUCTS
DISPOSITIF DE VIDANGE D'UN CAMION-CITERNE REMPLI DE PRODUITS PÉTROLIERS FLUIDES

(43) Veröffentlichungstag der Anmeldung: 09.02.2011
(73) Patentinhaber: Maveg Industrieausrüstungen Gmbh, 40878 Ratingen (DE); IGATEC GMBH, 67346 Speyer (DE)
(72) Erfinder: JAHNDORF, Helmut, 58091 Hagen (DE)
(74) Vertreter: Sparing, Rolf Klaus
(86) Internationale Anmeldenummer: PCT/DE2008/000672
(87) Internationale Veröffentlichungsnummer: WO 2009/129761

(56) Entgegenhaltungen:
- WO-A-95/15287
- SU-A1- 1 581 665
- US-A- 3 874 399

## Beschreibung

Die Erfindung betrifft eine Vorrichtung zur Entleerung eines mit fließfähigen Erdölprodukten gefüllten Kesselwagens, wobei der Kesselwagen oberseitig eine Befüll- und Entnahmeöffnung aufweist, ein Verfahren zum Entleeren des Kesselwagens und die Verwendung der Vorrichtung.

Bei normalen Temperaturen, das heißt Temperaturen, die oberhalb des Gefrierpunktes liegen, ist das Entleeren eines mit fließfähigen Erdölprodukten gefüllten Kesselwagens unproblematisch. Bei starkem Frost, also beispielsweise bei Temperaturen von -40 °C, frieren Erdölprodukte, insbesondere dunkle Erdölprodukte, wie beispielsweise Mazut (schweres Heizöl), ein und werden hart wie erstarrter Teer. Das Abfördern solcher Produkte aus einem Kesselwagen ist in diesem Zustand nicht möglich. Um bei derartig tiefen Temperaturen eine Entladung von gefüllten Kesselwagen zu ermöglichen, ist es bisher üblich, dass über eine Kupplung am Boden des Kesselwagens eine Leitung angeschlossen wird, die mit einer Förderleitung zum Abführen des Produktes aus dem Kesselwagen zu einem Vorratstank oder dergleichen verbunden ist. Zusätzlich wird durch die Bodenöffnung des Kesselwagens eine Lanze eingeführt, durch die Wasserdampf zugeführt wird. Durch den Wasserdampf wird das erstarrte Erdölprodukt bereichsweise und langsam erwärmt, so dass es in einen fließfähigen Zustand überführt wird und dann durch die entsprechende Leitung dem Vorratstank zugeführt werden kann.

Eine derartige Verfahrensweise ist sehr aufwändig, wobei zudem ein Problem darin besteht, dass der Wasserdampf, beziehungsweise das aufgrund der Abkühlung daraus kondensierte Wasser, zusätzlich abgeführt werden muss. Eine solche Verfahrensweise ist nicht nur zeitaufwändig und kostenintensiv, sondern mit vielerlei Nachteilen verbunden.

Ausgehend von diesem Stand der Technik liegt der Erfindung die Aufgabe zugrunde, eine Vorrichtung zur Entleerung eines mit fließfähigen Erdölprodukten gefüllten Kesselwagens zur Verfügung zu stellen, die es in einfacher Weise und ohne große Umstände ermöglicht, das aufgrund starken Frostes erstarrte Erdölprodukt zu verflüssigen und abzufördern.

WO-A-95/15287 offenbart eine Vorrichtung gemäß dem Oberbegriff des Anspruchs 1.

Es wurde eine Vorrichtung gemäß Anspruch 1 gefunden.

Das entsprechende Fallrohr wird erfindungsgemäß in die oberseitig des Kesselwagens befindliche Befüll- und Entnahmeöffnung eingesetzt, so dass seine Mündung im Bereich des Füllstandes des im Kesselwagen befindlichen erstarrten Erdölproduktes liegt. Das Fallrohr ist mit seinen beiden Förderrohren an die entsprechenden Rohrleitungen angeschlossen, die wiederum an den Vorheizbehälter angeschlossen sind, so dass ein in Prinzip geschlossener Kreislauf gebildet ist. In dem Vorheizbehälter ist vorzugsweise das gleiche Erdölprodukt gespeichert, welches auch in dem Kesselwagen abgefüllt ist. In dem Vorheizbehälter wird das Erdölprodukt auf eine geeignete Temperatur erhitzt, beispielsweise auf 60 °C oder auch auf 85 °C. Dieses erhitzte Erdölprodukt wird von dem Vorheizbehälter über die Zulaufleitung und die zweite Rohrleitung in das Förderrohr eingespeist und über dieses in den Kesselwagen eingebracht, so dass das erhitzte Erdölprodukt das im Kesselwagen befindliche erstarrte Erdölprodukt aufheizt und verflüssigt. Durch das erste Förderrohr des Fallrohres wird das zugeführte erhitzte Erdölprodukt und das verflüssigte Erdölprodukt, welches sich im Kesselwagen befindet, abgeführt und über die erste Rohrleitung zum Vorheizbehälter zurückgeführt. Eine Teilmenge des verflüssigten Erdölprodukts, welches aus dem Kesselwagen abgezogen wird, wird aus der Ablaufleitung abgezweigt und über eine Förderleitung in eine Rücklaufleitung eingespeist, die an einem Vorratstank angeschlossen ist, in welchem das aus dem Kesselwagen abgeförderte Volumen gelagert und gespeichert wird. Das Restvolumen, welches nicht über die Förderleitung abgezweigt wird, wird in dem Vorheizbehälter erneut auf Solltemperatur erhitzt und über die Zulaufleitung, die zweite Rohrleitung und das zweite Förderrohr wieder in den Kesselwagen eingeführt. Mit abnehmendem Füllstand innerhalb des Kesselwagens kann das Fallrohr tiefer in den Kesselwagen abgesenkt werden oder die Förderrohre des Fallrohres können entsprechend abgesenkt werden, um dem sinkenden Pegelstand innerhalb des Kesselwagens zu folgen.

Der Vorgang wird vorzugsweise solange durchgeführt, bis der Kesselwagen vollständig entleert ist. Es wird dann lediglich die flüssige Restmenge aus dem Kesselwagen abgezogen, ohne dass erneut erwärmtes Erdölprodukt zugeführt wird.

Die erfindungsgemäße Ausgestaltung ermöglicht es, Kesselwagen von fließfähigen Erdölprodukten zu entladen, auch wenn diese bei starkem Frost in dem Kesselwagen eingefroren sind. Dazu sind keine Fremdmedien, also kein Heißdampf oder dergleichen erforderlich, die eine zusätzliche Störungsquelle beim Entladen bilden könnten.

Um die Förderung des Erdölproduktes sowohl über die Zulaufleitung als auch die Ablaufleitung sicher durchführen zu können, ist vorzugsweise vorgesehen, dass in die Ablaufleitung und/oder in die Zulaufleitung eine Förderpumpe eingeschaltet ist.

Um die Aufheizung des Erdölproduktes in dem Vorheizbehälter in einfacher Weise durchführen zu können, ist vorzugsweise vorgesehen, dass in den Vorheizbehälter eine elektrische Heizung eingebaut ist.

Bei einem Gesamtvolumen des Kesselwagens von beispielsweise 70m³ ist üblicherweise oberhalb des Füllpegels in dem Kesselwagen noch ein Freiraum von bis zu 8 m³, so dass das Füllvolumen 62 m³ oder mehr ist. Der Vorheizbehälter hat beispielsweise ein Volumen von 10 m³, wobei der Vorheizbehälter aber nicht vollständig mit fließfähigem Erdölprodukt gefüllt ist, sondern vorzugsweise nur zu etwa 80 %, so dass eine Überfüllung des Vorheizbehälters in jedem Falle vermieden wird. Die Heizleistung der im Vorheizbehälter vorgesehenen elektrischen Heizung kann beispielsweise 120 KW sein. Vorzugsweise ist der Vorheizbehälter ein thermisch isoliertes Gefäß, so dass Wärmeverluste durch Wärmeabgabe an die Umgebung vermieden oder gemindert sind.

Zusätzlich kann auch vorgesehen sein, dass in die Zulaufleitung eine elektrische Heizung eingebaut ist.

Des Weiteren kann vorgesehen sein, dass in die Förderleitung ein Schaltventil eingebaut ist, mittels dessen die Förderleitung zu öffnen und zu schließen ist.

Durch Schließen des Schaltventiles kann die Förderleitung abgetrennt werden, so dass eine Zirkulation des verflüssigten Erdölproduktes in dem Kreislauf möglich ist. Bei Erreichen einer bestimmten Füllhöhe in dem Vorheizbehälter wird das Schaltventil geöffnet, so dass dann in jedem Falle die Übermenge über die Förderleitung in den Vorratstank abgefördert werden kann.

Zusätzlich kann vorgesehen sein, dass mindestens einige Leitungen eine Wärmeisolierung, insbesondere einen Isoliermantel, aufweisen.

Diese Maßnahme dient dazu, ein Einfrieren der Leitungen zu unterbinden und eine unerwünschte Wärmeabgabe an die Umgebung zu vermeiden oder jedenfalls zu mindern.

Zusätzlich kann vorgesehen sein, dass mindestens einige Leitungen eine elektrische Heizung, insbesondere einen elektrischen Heizmantel aufweisen.

Auf diese Weise wird ebenso das Einfrieren der Leitungen vermieden. Die Heizleistung ist vorzugsweise derart ausgelegt, dass die Förderung des Mediums auch in der Ablaufleitung bei Temperaturen von höher als 70 °C erfolgen kann.

Zusätzlich kann vorgesehen sein, dass zwischen der Zulaufleitung und der Ablaufleitung eine mittels eines Ventils zu öffnende oder zu schließende Kurzschlussleitung vorgesehen ist.

Hierdurch kann eine Zirkulation des im Vorheizbehälter befindlichen Mediums über die Kurzschlussleitung erfolgen, sofern eine Abförderung aus dem Kesselwagen noch nicht erwünscht ist oder aufgrund von Manipulationen unterbrochen werden soll.

Gegenstand der Erfindung ist ferner ein Verfahren zum Entleeren eines mit fließfähigen Erdölprodukten gefüllten Kesselwagens (1) mit einer Vorrichtung gemäß Anspruch 1 bei Temperaturen, bei denen das Erdölprodukt im Kesselwagen (1) erstarrt ist,
wobei in einem Vorheizbehälter (13) gespeichertes Erdölprodukt (14) aufgeheizt wird, das aufgeheizte Erdölprodukt (14) in den Kesselwagen (1) geleitet und durch dieses mindestens ein Teil (3) des erstarrten Erdölprodukts (2) auf eine solche Temperatur erwärmt wird, dass es fließfähig ist, das aufgeheizte Erdölprodukt (14) mit dem fließfähig erwärmten Erdölprodukt (3) des Kesselwagens (1) abgefördert wird und ein erster Teil dieser Fördermenge in einen Vorratstank geleitet und gelagert wird sowie ein zweiter Teil dieser Fördermenge in den Vorheizbehälter (13) geleitet, dort erwärmt und wieder in den Kesselwagen (1) transportiert wird,
wobei das aufgeheizte Erdölprodukt (14) innerhalb des Vorheizbehälters (13) aufgeheizt wird.

Durch das Verfahren ist es möglich, einen Kesselwagen auch bei starkem Frost, also bei Temperaturen von weniger als -40 °C zu entladen, wenn nämlich das im Kesselwagen befindliche Erdölprodukt erstarrt ist, ohne dass Fremdmaterialien wie Wasserdampf oder dergleichen zur Erhitzung der im Kesselwagen befindlichen Erdölmenge erforderlich ist. Die Erhitzung und damit die Abförderung des Erdölproduktes aus dem Kesselwagen wird allein durch die Aufheizung von dem Erdölprodukt erreicht, welches in einem Vorheizbehälter gespeichert und erhitzt wird.

Dabei kann vorzugsweise vorgesehen sein, dass das zum Kesselwagen geleitete Erdölprodukt auf seinem Förderweg aufgeheizt wird und/oder das vom Kesselwagen abgeführte Erdölprodukt auf seinem Förderweg aufgeheizt wird.

Gegenstand der vorliegenden Erfindung ist auch die Verwendung einer Vorrichtung zur Entleerung eines mit fließfähigen Erdölprodukten gefüllten Kesselwagens bei tiefen Temperaturen, wobei der Kesselwagen oberseitig eine Befüll- und Entnahmeöffnung aufweist, wobei ein Fallrohr vorgesehen ist, welches in die Befüll- und Entnahmeöffnung eingesetzt ist, wobei das Fallrohr ein erstes Förderrohr und konzentrisch dazu ein zweites Förderrohr aufweist, wobei beide Förderrohre in das Kesselwageninnere offen ausmünden und an die außen liegenden Enden der Förderrohre jeweils eine Rohrleitung angeschlossen ist, wobei an die erste Rohrleitung, die an das erste Förderrohr angeschlossen ist, eine Ablaufleitung angeschlossen ist, die mit dem Eingang eines Vorheizbehälters verbunden ist, der mit dem Erdölprodukt befüllt ist, wobei an den Ausgang des Vorheizbehälters eine Zulaufleitung angeschlossen ist, die über die zweite Rohrleitung an das zweite Förderrohr angeschlossen ist. und wobei von der Ablaufleitung eine Förderleitung abgezweigt ist, die mit einer Rücklaufleitung für das Erdölprodukt verbunden ist, die an einen Vorratstank angeschlossen ist.

In den beigefügten Zeichnungen sind ein bevorzugtes Ausführungsbeispiel einer erfindungsgemäßen Vorrichtung sowie deren Betriebsweise schematisch erläutert.

Es zeigt:

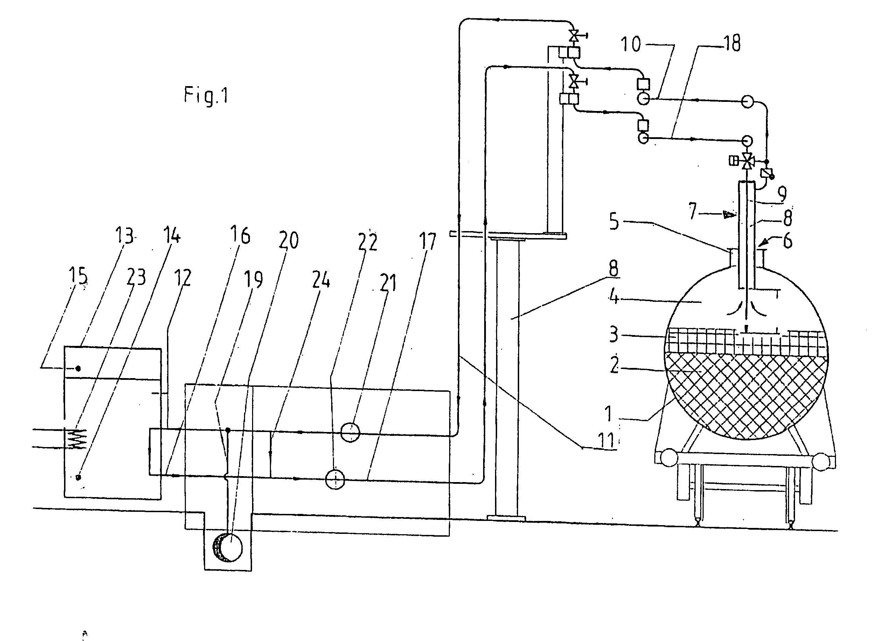

- Fig. 1: ein erstes bevorzugtes Ausführungsbeispiel einer erfindungsgemäßen Vorrichtung in schematischer Ansicht;
- Fig. 2: eine Einzelheit der Vorrichtung gemäß Fig. 1;
- Fig. 3: die Einzelheit gemäß Fig. 2 im vergrößerten Maßstab.

In den Zeichnungen ist ein Kesselwagen 1 gezeigt, der mit Erdölprodukt gefüllt ist. Bei 2 ist ein Produktanteil der Füllung gezeigt, der aufgrund starken Frostes eingefroren ist. Bei 3 ist ein Teilbereich der Kesselfüllung gezeigt, der aufgrund später noch beschriebener Maßnahmen verflüssigt ist. Bei 4 ist ein Freiraum oberhalb des Füllpegels des Kesselwagens gezeigt. Bei 5 ist ein so genannter Dom des Kesselwagens gezeigt, der eine oberseitige Befüll- und Entnahmeöffnung 6 bildet. Damit das in dem Kesselwagen 1 befindliche eingefrorene Erdölprodukt 2 aus dem Kesselwagen 1 abgefördert werden kann, ist ein Fallrohr 7 vorgesehen, welches in an sich bekannter Weise als Bestandteil einer Befüll- und Entnahmevorrichtung derart beispielsweise an einem Gestell 8 über Rohleitungen und Drehgelenke befestigt ist, dass es über der Befüll- und Entnahmeöffnung 6 positioniert und in diese Öffnung eingesenkt werden kann. Das Fallrohr 7 weist ein erstes Förderrohr 8 und konzentrisch dazu ein zweites Förderrohr 9 auf. Beide Förderrohre 8, 9 münden in der Zeichnung unten offen in das Kesselwageninnere aus. An die oben befindlichen, außen liegenden Enden der Förderrohre 8, 9 ist jeweils eine Rohrleitung angeschlossen. An die erste Rohrleitung 10, die an das erste Förderrohr 8 angeschlossen ist, ist eine Ablaufleitung 11 angeschlossen, die mit dem Eingang 12 eines Vorheizbehälters 13 verbunden ist. Dieser Vorheizbehälter 13 ist ebenfalls mit einem Erdölprodukt 14 gefüllt. Oberhalb des Füllstandes des Erdölproduktes 14 ist innerhalb des Vorheizbehälters 13 ein Freiraum 15 vorhanden. An dem Ausgang 16 des Vorheizbehälters 13 ist eine Zulaufleitung 17 angeschlossen, die über die zweite Rohrleitung 18 an das zweite Förderrohr 9 angeschlossen ist. Zusätzlich ist von der Ablaufleitung 11 eine Förderleitung 19 abgezweigt, die mit einer Rücklaufleitung 20 in Verbindung steht, die zu einem in der Zeichnung nicht dargestellten Vorratstank führt, in dem das aus dem Kesselwagen 1 abgezogene Erdölprodukt gelagert wird. Zum Entladen des Kesselwagens 1 wird das Fallrohr 7 in die Öffnung 6 eingeführt und in Richtung auf den Füllstand des Kesselwagens 1 abgesenkt. Das in dem Vorratsbehälter 13 befindliche Erdölprodukt 14 wird aufgeheizt auf eine geeignete Temperatur und über den Ausgang 16 in die Zulaufleitung 17 eingespeist und von dort über die zweite Rohrleitung 18 und das zweite Förderrohr 9 in den Kesselwagen 1 geführt. Dieses erhitzte Erdölprodukt verflüssigt nun das im Kesselwagen 1 befindliche Erdölprodukt 2 beispielsweise im Bereich einer Schicht 3. Das aus dem Vorheizbehälter 13 zugeführte Erdölprodukt 14 kann dann zusammen mit dem erweichten Erdölprodukt 3, welches sich im Kesselwagen 1 befindet, über das erste Förderrohr 8 abgezogen werden und über die erste Rohrleitung 10 und die Ablaufleitung 11 in den Vorheizbehälter 13 zurückgeführt werden. Dabei wird ein Teil dieser Menge, der der aus dem Kesselwagen 1 entnommenen Zusatzmenge entspricht, über die Förderleitung 19 abgezweigt und über die Rücklaufleitung 20 in einen Speichertank überführt. Vorzugsweise ist in die Ablaufleitung 11 und in die Zulaufleitung 17 jeweils eine Förderpumpe 21, 22 eingeschaltet, um das in den Leitungen befindliche Medium entsprechend der Pfeilrichtung, die in der Zeichnung angegeben ist, zu transportieren. Um das in dem Vorheizbehälter 13 befindliche Erdölprodukt 14 auf eine geeignete Temperatur von beispielsweise 60 °C oder auch von 85 °C aufheizen zu können, ist in den Vorheizbehälter 13 eine elektrische Heizung oder eine Beheizung mit Heißdampf 23 eingebaut, die an eine entsprechende Stromquelle angeschlossen ist. Zusätzlich kann in die Zulaufleitung 17 noch eine elektrische Heizung eingebaut werden, sofern dies erforderlich ist.

In die Förderleitung 19 kann zusätzlich ein Schaltventil eingebaut sein, mittels dessen die Förderleitung geöffnet werden kann oder geschlossen werden kann. Vorzugsweise sind alle Leitungen mit einer Wärmeisolierung, insbesondere einem Isoliermantel versehen, wobei zusätzlich die Leitungen mit einer elektrischen Heizung, insbesondere einem elektrischen Heizmantel versehen werden können. Dazu ist der Heizmantel unmittelbar auf die Leitungen aufgebracht und der Heizmantel wiederum ist von einem Isoliermantel außen umgeben, so dass Wärmeverluste weitgehend vermieden sind.

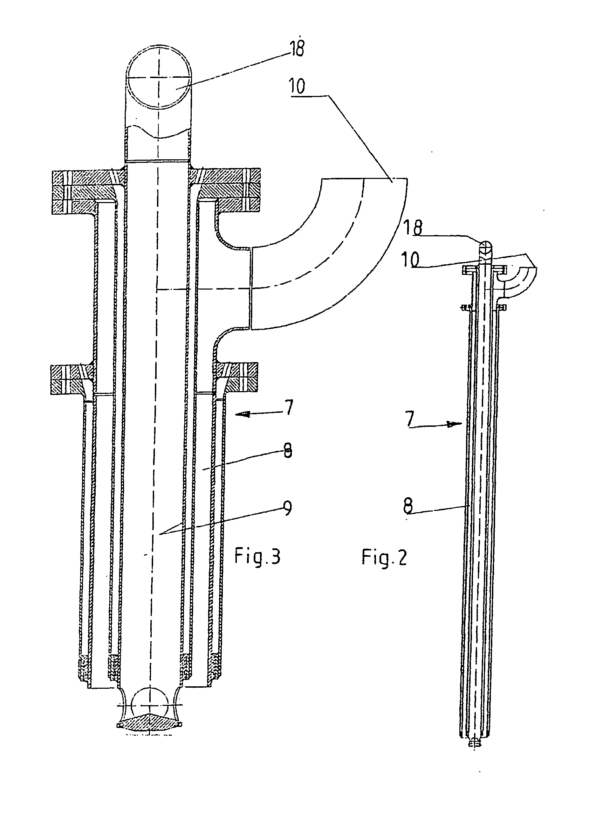

Schließlich kann zwischen der Zulaufleitung 17 und der Ablaufleitung 11 noch eine mittels eines Ventils zu öffnende oder zu schließende Kurzschlussleitung 24 vorgesehen sein. In Fig. 2 und 3 ist das Fallrohr 7 mit dem ersten Förderrohr 8 und dem zweiten Förderrohr 9 als Einzelheit gezeigt. Die erste Rohrleitung 10 ist in der Zeichnung ebenso angedeutet, wie die zweite Rohrleitung 18. Wie aus der Zeichnung ersichtlich, sind die Förderrohre 8 beziehungsweise 9 nach unten offen, während sie nach oben an die entsprechenden Rohrleitungen 10 beziehungsweise 18 anschließen. Die Förderrohre 8, 9 sind vorzugsweise elektrisch beheizt, beispielsweise mit einem elektrischen Heizmantel, der jeweils das Förderrohr 8, 9 umgibt.

Die Erfindung ist nicht auf das Ausführungsbeispiel beschränkt, sondern im Rahmen der Offenbarung vielfach variabel.

Es versteht sich, dass die in der Beschreibung und/oder den Zeichnungen offenbarten Einzel- und Kombinationsmerkmale jeweils sowohl in ihrer Kombination als auch in der jeweiligen Ausgestaltung im Rahmen der Offenbarung veränderbar sind und jeweils einzeln oder in Kombination als zur Erfindung gehörig angesehen werden können.

Mit Hilfe der erfindungsgemäßen Vorrichtung gelingt es in überraschender Weise, kohlenwasserstoffhaltige Stoffgemische, insbesondere Mazut, bei niedrigen Temperaturen aus Kesselwagen zu verladen und einer Weiterverarbeitung zuzuführen.

Vorstehend wurde ein bevorzugtes Ausführungsbeispiel einer erfindungsgemäßen Vorrichtung beschrieben, bei der das erste Förderrohr und das zweite Förderrohr konzentrisch zueinander ausgerichtet sind und gemeinsam von oben durch eine obere Befüll- und Entnahmeöffnung in einen Kesselwagen eingeführt werden. Es versteht sich, dass die Förderrohre auch anders als konzentrisch zueinander angeordnet sein können, beispielsweise zueinander benachbart verlaufend, oder jeweils separat ausgebildet sein können. Es versteht sich ferner, dass die Befüll- und Entnahmeöffnung nicht an der Oberseite des Kesselwagens angeordnet sein muss, sondern ebenso auch an einer Seitenfläche oder Unterseite des Kesselwagens angeordnet sein kann. Es versteht sich zudem, dass ebenso separate Befüllöffnungen und Entnahmeöffnungen vorgesehen sein können.

Vorstehend wurde eine erfindungsgemäße Vorrichtung anhand eines bevorzugten Ausführungsbeispiels beschrieben, bei dem ein erstes Förderrohr bzw. ein zweites Förderrohr jeweils über eine erste Rohrleitung und eine Ablaufleitung bzw. über eine zweite Rohrleitung und eine Zulaufleitung mit dem Vorheizbehälter verbunden sind. Es versteht sich, dass das erste Förderrohr bzw. das zweite Förderrohr ebenso einstückig mit dem Vorheizbehälter verbunden sein können oder dass weitere Leitungselemente zwischengeschaltet sein können. Es versteht sich ferner, dass eine Heizung des Vorheizbehälters nicht unmittelbar in dem Vorheizbehälter selbst angeordnet sein muss, sondern diesem auch an anderer Stelle zugeordnet sein kann.

### BEZUGSZEICHENLISTE

- 1.: Kesselwagen
- 2.: Füllungsstand
- 3.: Verflüssigter Teilbereich der Kesselfüllung
- 4.: Freiraum oberhalb des Füllpegels
- 5.: Dom des Kesselwagens
- 6.: Befüll- und Entnahmeöffnung
- 7.: Fallrohr
- 8.: Befestigungsgestell
- 9.: erstes Förderrohr
- 10.: zweites Förderrohr
- 11.: Ablaufleitung
- 12.: Eingang des Vorheizbehälters (13)
- 13.: Vorheizbehälter
- 14.: zugeführtes Erdölprodukt
- 15.: Freiraum
- 16.: Ausgang des Vorheizbehälters (13)
- 17.: Zulaufleitung
- 18.: Rohrleitung
- 19.: Förderleitung
- 20.: Rücklaufleitung
- 21.: Förderpumpe
- 22.: Förderpumpe
- 23.: Heizung
- 24.: Kurzschlussleitung

## Patentansprüche

1. Vorrichtung zur Entleerung eines mit fließfähigen Erdölprodukten gefüllten Kesselwagens (1), wobei der Kesselwagen (1) oberseitig eine Befüll- und Entnahmeöffnung (6) aufweist, umfassend
ein Fallrohr (7), welches in die Befüll- und Entnahmeöffnung (6) einsetzbar ist,
wobei das Fallrohr (7) ein erstes Förderrohr (8) und ein zweites Förderrohr (9) aufweist,
wobei beide Förderrohre (8, 9) in das Kesselwageninnere offen ausmünden,
eine erste Rohrleitung (10), die an das außen liegende Ende des ersten Förderrohrs (8) angeschlossen ist,
eine zweite Rohrleitung (18), die an das außen liegende Ende des zweiten Förderrohrs (9) angeschlossen ist,
einen Vorheizbehälter (13) für Erdölprodukt,
eine Ablaufleitung (11), die an die erste Rohrleitung (10) angeschlossen ist, die mit einem Eingang (12) des Vorheizbehälters (13) für Erdölprodukt verbunden ist, der mit einem Erdölprodukt (14) befüllt ist,
eine Zulaufleitung (17), die an einen Ausgang (16) des Vorheizbehälters (13) angeschlossen ist, die über die zweite Rohrleitung (18) an das zweite Förderrohr (9) angeschlossen ist, und
eine Förderleitung (19), die von der Ablaufleitung (11) abgezweigt ist, die mit einer Rücklaufleitung (20) für das Erdölprodukt verbundbar ist, die an einen Vorratstank angeschlossen ist,
**dadurch gekennzeichnet,**
**dass** das erste Förderrohr (8) und das zweite Förderrohr (9) konzentrisch zueinander angeordnet sind.

2. Vorrichtung nach Anspruch 1, **dadurch gekennzeichnet, dass** in die Ablaufleitung (11) und/oder in die Zulaufleitung (17) eine Förderpumpe (21, 22) eingeschaltet ist.

3. Vorrichtung nach einem der Ansprüche 1 oder 2, **dadurch gekennzeichnet, dass** in den Vorheizbehälter (13) eine elektrische Heizung (23) eingebaut ist.

4. Vorrichtung nach einem der Ansprüche 1 bis 3, **dadurch gekennzeichnet, dass** in die Zulaufleitung (17) eine elektrische Heizung eingebaut ist.

5. Vorrichtung nach einem der Ansprüche 1 bis 4, **dadurch gekennzeichnet, dass** in die Förderleitung (19) ein Schaltventil eingebaut ist, mittels dessen die Förderleitung (19) zu öffnen und zu schließen ist.

6. Vorrichtung nach einem der Ansprüche 1 bis 5, **dadurch gekennzeichnet, dass** mindestens einige Leitungen eine Wärmeisolierung, insbesondere einen Isoliermantel, aufweisen.

7. Vorrichtung nach einem der Ansprüche 1 bis 6, **dadurch gekennzeichnet, dass** mindestens einige Leitungen eine elektrische Heizung, insbesondere einen elektrischen Heizmantel aufweisen.

8. Vorrichtung nach einem der Ansprüche 1 bis 7, **dadurch gekennzeichnet, dass** zwischen der Zulaufleitung (17) und der Ablaufleitung (11) eine mittels eines Ventils zu öffnende oder zu schließende Kurzschlussleitung (24) vorgesehen ist.

9. Verfahren zum Entleeren eines mit fließfähigen Erdölprodukten gefüllten Kesselwagens (1) mit einer Vorrichtung gemäß Anspruch 1 bei Temperaturen, bei denen das Erdölprodukt im Kesselwagen (1) erstarrt ist,
wobei in einem Vorheizbehälter (13) gespeichertes Erdölprodukt (14) aufgeheizt wird, das aufgeheizte Erdölprodukt (14) in den Kesselwagen (1) geleitet und durch dieses mindestens ein Teil (3) des erstarrten Erdölprodukts (2) auf eine solche Temperatur erwärmt wird, dass es fließfähig ist, das aufgeheizte Erdölprodukt (14) mit dem fließfähig erwärmten Erdölprodukt (3) des Kesselwagens (1) abgefördert wird und ein erster Teil dieser Fördermenge in einen Vorratstank geleitet und gelagert wird sowie ein zweiter Teil dieser Fördermenge in den Vorheizbehälter (13) geleitet, dort erwärmt und wieder in den Kesselwagen (1) transportiert wird,
wobei das aufgeheizte Erdölprodukt (14) innerhalb des Vorheizbehälters (13) aufgeheizt wird.

10. Verfahren nach Anspruch 9, **dadurch gekennzeichnet, dass** das zum Kesselwagen (1) geleitete Erdölprodukt (14) auf seinem Förderweg aufgeheizt wird und/oder das vom Kesselwagen (1) abgeführte Erdölprodukt (3) auf seinem Förderweg aufgeheizt wird.

11. Verwendung einer Vorrichtung nach einem der Ansprüche 1 bis 8 zur Entleerung eines mit fließfähigen Erdölprodukten gefüllten Kesselwagens bei tiefen Temperaturen, wobei der Kesselwagen (1) oberseitig eine Befüll- und Entnahmeöffnung (6) aufweist.

12. Entleerungsvorrichtung zur Entleerung verfestigter kohlenwasserstoffhaltiger Stoffgemische aus einem Behältnis (1), umfassend ein beheizbares Vorratsvolumen (13),
ein in das Behältnis (1) einbringbares erstes Förderrohr (8),
ein in das Behältnis (1) einbringbares zweites Förderrohr (9),
wobei das erste Förderrohr (8) mit dem beheizbaren Vorratsvolumen (13) verbunden ist,
wobei das zweite Förderrohr (9) mit dem beheizbaren Vorratsvolumen (13) verbunden ist,
wobei dem beheizbaren Vorratsvolumen (13) eine Heizvorrichtung (23) zugeordnet ist,
wobei durch das beheizbare Vorratsvolumen (13), das erste Förderrohr (8), das zweite Förderrohr (9) und das Behältnis (1) ein Kreislaufsystem für das kohlenwasserstoffhaltige Stoffgemisch ausbildbar ist, und
wobei wenigstens eine Förderleitung (19, 20) vorgesehen ist, um Teile des kohlenwasserstoffhaltigen Stoffgemischs aus dem Kreislaufsystem zu entnehmen,
**dadurch gekennzeichnet,**
**dass** das erste Förderrohr (8) konzentrisch zu dem zweiten Förderrohr (9) ausgebildet ist.

13. Entleerungsvorrichtung nach Anspruch 12, **dadurch gekennzeichnet, dass** eine Eindringtiefe des ersten Förderrohrs (8) und/oder des zweiten Förderrohrs (9) in das Behältnis (1) einstellbar ist.

14. Entleerungsvorrichtung nach Anspruch 12 oder 13, **dadurch gekennzeichnet, dass** das erste Förderrohr (8) und das zweite Förderrohr (9) wenigstens Abschnittsweise eine gemeinsame Fallrohranordnung (7) ausbilden.

## Claims

1. Apparatus for emptying a tank car (1) filled with flowable crude oil products, the tank car (1) having a filling and extraction orifice (6) on the top side, comprising
a downpipe (7) which can be inserted into the filling and extraction orifice (6),
the downpipe (7) having a first conveying pipe (8) and a second conveying pipe (9),
both conveying pipes (8, 9) issuing, open, into the tank car interior,
a first pipeline (10) which is connected to the outer end of the first conveying pipe (8),
a second pipeline (18) which is connected to the outer end of the second conveying pipe (9),
a preheating vessel (13) for crude oil product,
an outflow line (11) which is connected to the first pipeline (10) and which is connected to an inlet (12) of the preheating vessel (13) for crude oil product which is filled with a crude oil product (14),
an inflow line (17) which is connected to an outlet (16) of the preheating vessel (13) and which is connected to the second conveying pipe (9) via the second pipeline (18), and
a conveying line (19) which is branched off from the outflow line (11) and is connectable to a return line (20) for the crude oil product which is connected to a storage tank,
**characterized**
**in that** the first conveying pipe (8) and the second conveying pipe (9) are arranged concentrically to one another.

2. Apparatus according to Claim 1, **characterized in that** a conveying pump (21, 22) is inserted into the outflow line (11) and/or into the inflow line (17).

3. Apparatus according to either one of Claims 1 and 2, **characterized in that** electrical heating (23) is incorporated into the preheating vessel (13).

4. Apparatus according to one of Claims 1 to 3, **characterized in that** electrical heating is incorporated into the inflow line (17).

5. Apparatus according to one of Claims 1 to 4, **characterized in that** the conveying line (19) has incorporated into it a switching valve by means of which the conveying line (19) can be opened and closed.

6. Apparatus according to one of Claims 1 to 5, **characterized in that** at least some lines have heat insulation, in particular an insulating jacket.

7. Apparatus according to one of Claims 1 to 6, **characterized in that** at least some lines have electrical heating, in particular an electrical heating jacket.

8. Apparatus according to one of Claims 1 to 7, **characterized in that** a short-circuit line (24) to be opened or closed by means of a valve is provided between the inflow line (17) and the outflow line (11).

9. Method for emptying a tank car (1) filled with flowable crude oil products by means of an apparatus according to Claim 1 at temperatures at which the crude oil product in the tank car (1) is solidified,
crude oil product (14) stored in a preheating vessel (13) being heated, the heated crude oil product (14) being conducted into the tank car (1), and at least part (3) of the solidified crude oil product (2) being heated by the said heated crude oil product to a temperature such that it is flowable, the heated crude oil product (14), together with the flowably heated crude oil product (3) of the tank car (1), being conveyed away, and a first part of this conveyed quantity being conducted into a storage tank and stored, and also a second part of this conveyed quantity being conducted into the preheating vessel (13), heated there and transported into the tank car (1) again,
the heated crude oil product (14) being heated inside the preheating vessel (13).

10. Method according to Claim 9, **characterized in that** the crude oil product (14) conducted to the tank car (1) is heated on its path of conveyance and/or the crude oil product (3) discharged from the tank car (1) is heated on its path of conveyance.

11. Use of an apparatus according to one of Claims 1 to 8 for emptying a tank car filled with flowable crude oil products at low temperatures, the tank car (1) having a filling and extraction orifice (6) on the top side.

12. Emptying apparatus for emptying solidified hydrocarbon-containing substance mixtures out of a container (1), comprising
a heatable storage volume (13),
a first conveying pipe (8) introducible into the container (1),
a second conveying pipe (9) introducible into the container (1),
the first conveying pipe (8) being connected to the heatable storage volume (13),
the second conveying pipe (9) being connected to the heatable storage volume (13),
a heating device (23) being assigned to the heatable storage volume (13),
a circulatory system for the hydrocarbon-containing substance mixture being capable of being formed by the heatable storage volume (13), the first conveying pipe (8), the second conveying pipe (9) and the container (1), and
at least one conveying line (19, 20) being provided in order to extract parts of the hydrocarbon-containing substance mixture from the circulatory system,
**characterized**
**in that** the first conveying pipe (8) is formed concentrically to the second conveying pipe (9).

13. Emptying apparatus according to Claim 12, **characterized in that** a depth of penetration of the first conveying pipe (8) and/or of the second conveying pipe (9) into the container (1) is adjustable.

14. Emptying apparatus according to Claim 12 or 13, **characterized in that** the first conveying pipe (8) and the second conveying pipe (9) form at least partially a common downpipe arrangement (7).

## Revendications

1. Dispositif pour la vidange d'un wagon-citerne (1) rempli de produits pétroliers fluides, dans lequel le wagon-citerne (1) présente côté supérieur une ouverture de remplissage et de prélèvement (6), comprenant
un tube de descente (7), qui peut être introduit dans l'ouverture de remplissage et de prélèvement (6),
dans lequel le tube de descente (7) présente un premier tube d'alimentation (8) et un deuxième tube d'alimentation (9),
dans lequel les deux tubes d'alimentation (8, 9) débouchent de façon ouverte à l'intérieur du wagon-citerne,
une première conduite tubulaire (10), qui est raccordée à l'extrémité extérieure du premier tube d'alimentation (8),
une deuxième conduite tubulaire (18), qui est raccordée à l'extrémité extérieure du deuxième tube d'alimentation (9),
un réservoir de préchauffage (13) pour produit pétrolier,
une conduite d'évacuation (11), qui est raccordée à la première conduite tubulaire (10), et qui est raccordée à une entrée (12) du réservoir de préchauffage (13) pour produit pétrolier qui est rempli d'un produit pétrolier (14),
une conduite d'arrivée (17), qui est raccordée à une sortie (16) du réservoir de préchauffage (13), et qui est raccordée au deuxième tube d'alimentation (9) par la deuxième conduite tubulaire (18), et
une conduite de transport (19), qui est dérivée de la conduite d'évacuation (11), et qui peut être raccordée à une conduite de retour (20) pour le produit pétrolier, qui est raccordée à un réservoir de stockage,
**caractérisé en ce que**
le premier tube d'alimentation (8) et le deuxième tube d'alimentation (9) sont disposés concentriquement l'un à l'autre.

2. Dispositif selon la revendication 1, **caractérisé en ce qu'**une pompe d'alimentation (21, 22) est insérée dans la conduite d'évacuation (11) et/ou dans la conduite d'arrivée (17).

3. Dispositif selon l'une quelconque des revendications 1 ou 2, **caractérisé en ce qu'**un chauffage électrique (23) est installé dans le réservoir de préchauffage (13).

4. Dispositif selon l'une quelconque des revendications 1 à 3, **caractérisé en ce qu'**un chauffage électrique est installé dans la conduite d'arrivée (17).

5. Dispositif selon l'une quelconque des revendications 1 à 4, **caractérisé en ce qu'**une soupape de commande est installée dans la conduite de transport (19), au moyen de laquelle la conduite de transport (19) peut être ouverte et fermée.

6. Dispositif selon l'une quelconque des revendications 1 à 5, **caractérisé en ce qu'**au moins quelques conduites présentent une isolation thermique, en particulier une chemise isolante.

7. Dispositif selon l'une quelconque des revendications 1 à 6, **caractérisé en ce qu'**au moins quelques conduites présentent un chauffage électrique, en particulier une chemise chauffante électrique.

8. Dispositif selon l'une quelconque des revendications 1 à 7, **caractérisé en ce qu'**il est prévu entre la conduite d'arrivée (17) et la conduite d'évacuation (11) une conduite de dérivation (24) pouvant être ouverte ou fermée au moyen d'une soupape.

9. Procédé pour la vidange d'un wagon-citerne (1) rempli de produits pétroliers fluides avec un dispositif selon la revendication 1 à des températures auxquelles le produit pétrolier est figé dans le wagon-citerne (1),
dans lequel on échauffe un produit pétrolier (14) stocké dans un réservoir de préchauffage (13), on conduit le produit pétrolier échauffé (14) dans le wagon-citerne (1) et on chauffe avec ce dernier au moins une partie (3) du produit pétrolier figé (2) à une température telle qu'il devienne fluide, on évacue le produit pétrolier échauffé (14) avec le produit pétrolier chauffé fluide (3) du wagon-citerne (1) et on conduit et on stocke une première partie de cette quantité transportée dans un réservoir de stockage et on conduit une deuxième partie de cette quantité transportée dans le réservoir de préchauffage (13), on l'y chauffe et on la transporte de nouveau dans le wagon-citerne (1),
dans lequel on chauffe le produit pétrolier échauffé (14) à l'intérieur du réservoir de préchauffage (13).

10. Procédé selon la revendication 9, **caractérisé en ce que** l'on échauffe le produit pétrolier (14) conduit vers le wagon-citerne (1) sur son trajet de transport et/ou on échauffe le produit pétrolier (3) évacué du wagon-citerne (1) sur son trajet de transport.

11. Utilisation d'un dispositif selon l'une quelconque des revendications 1 à 8 pour la vidange d'un wagon-citerne rempli de produits pétroliers fluides à des températures basses, dans laquelle le wagon-citerne (1) présente côté supérieur une ouverture de remplissage et de prélèvement (6).

12. Dispositif de vidange pour la vidange de mélanges figés de substances contenant des hydrocarbures hors d'un réservoir (1), comprenant
un volume de stockage pouvant être chauffé (13),
un premier tube d'alimentation (8) pouvant être introduit dans le réservoir (1),
un deuxième tube d'alimentation (9) pouvant être introduit dans le réservoir (1),
dans lequel le premier tube d'alimentation (8) est raccordé au volume de stockage pouvant être chauffé (13),
dans lequel le deuxième tube d'alimentation (9) est raccordé au volume de stockage pouvant être chauffé (13),
dans lequel un dispositif de chauffage (23) est associé au volume de stockage pouvant être chauffé (13),
dans lequel on peut bâtir, au moyen du volume de stockage pouvant être chauffé (13), du premier tube d'alimentation (8), du deuxième tube d'alimentation (9) et du réservoir (1), un système de circuit pour le mélange de substances contenant des hydrocarbures, et
dans lequel il est prévu au moins une conduite de transport (19, 20), pour prélever une partie du mélange de substances contenant des hydrocarbures hors du système de circuit,
**caractérisé en ce que**
le premier tube d'alimentation (8) est réalisé concentriquement au deuxième tube d'alimentation (9).

13. Dispositif de vidange selon la revendication 12, **caractérisé en ce qu'**une profondeur de pénétration du premier tube d'alimentation (8) et/ou du deuxième tube d'alimentation (9) dans le réservoir (1) est réglable.

14. Dispositif de vidange selon la revendication 12 ou 13, **caractérisé en ce que** le premier tube d'alimentation (8) et le deuxième tube d'alimentation (9) forment au moins partiellement un agencement de tubes de descente commun (7).
